# EUROPEAN PATENT SPECIFICATION

(11) **EP 4 422 574 B1**
(45) Date of publication and mention of the grant of the patent: **01.04.2026**
(21) Application number: 22802068.1
(22) Date of filing: 10.10.2022
(51) Int. Cl.: A61G 15/16, A61C 3/00, A61C 19/00

(54) **MECHANISM FOR ASSEMBLING AND DISASSEMBLING THE HANDLES AND THE INSTRUMENT HOLDER, OF A MEDICAL ELEMENT**
MECHANISMUS ZUR MONTAGE UND DEMONTAGE DER GRIFFE UND DES INSTRUMENTENHALTERS EINES MEDIZINISCHEN ELEMENTS
MÉCANIQUE DESTINÉE AU MONTAGE ET AU DÉMONTAGE DES POIGNÉES ET DU PORTE-INSTRUMENT, D'UNE TABLETTE MÉDICALE

(30) Priority: 29.10.2021 EP 21205497
(43) Date of publication of application: 04.09.2024
(73) Proprietor: Dentsply Sirona Inc., York, PA 17401 (US); Sirona Dental Systems GmbH, 64625 Bensheim (DE)
(72) Inventor: BÄTHGE, Tobias, 64625 Bensheim (DE); RACKEBRANDT, Thorsten, 64625 Bensheim (DE)
(74) Representative: Allen, Caroline Margaret
(86) International application number: PCT/EP2022/078108
(87) International publication number: WO 2023/072569

(56) References cited:
- EP-A2- 1 177 783
- US-A- 3 949 480

## Description

### TECHNICAL FIELD OF THE INVENTION

The present invention relates to dental treatment units, and in particular to the dentist element thereof.

### BACKGROUND OF THE INVENTION

When changing patients in a dental practice, it is necessary that the dentist element can be cleaned and hygienically reprocessed as intensively as possible on critical surfaces in order to prevent the transfer of germs between persons, users & patients. For this reason, the handles of current dentist elements are designed to be removable to allow thermal disinfection of the handles. Alternatively, the handles are protected with disposable silicone overlays. A current known mechanism for the assembly and disassembly of the dentist element has a sleeve-shaped handle and a latch on a horn-shaped carrier on the dentist element.

The instrument tray is used for safe positioning of the electrically and hydropneumatically operated instruments. For reasons of hygiene, the instrument tray is also designed to be removable so that it can be hygienically reprocessed in a thermodisinfector.

The hygiene of the dentist element and the instrument tray of a dental treatment unit is of crucial importance for the dental work. In the prior art, there is the problem that the separate locking elements for mounting and dismounting the handle of the dentist element and instrument tray have limited operability and increase the risk of contamination.

Relevant prior art is exemplified by EP 1 177 783 A2, and US 3 949 480 A.

### DISCLOSURE OF THE INVENTION

Currently, the inventors are not aware of any prior art dental treatment units in which an actuating element, which serves to unlock the handle, can also be used to separately unlock the instrument tray. Thus, the actuating element can be provided with a dual function to improve operability and reduce the risk of contamination.

The objective of the invention is to provide a dental treatment unit in which the locking/unlocking of the handle and the instrument tray can be performed selectively and easily by means of a common actuating element.

This objective is achieved by the dental treatment unit according to claim 1. The subject-matters of the dependent claims relate to preferred embodiments and to further developments.

The dental treatment unit according to the invention has a movable dentist element. The dentist element comprises: at least one removable handle for moving the dentist element; a removable instrument tray for depositing instruments, wherein the instrument tray has one or more claws for respectively depositing one or more instruments; a first locking mechanism for locking/unlocking the handle, wherein, in the unlocked state, the handle is removable from the dentist element; a second locking mechanism for locking/unlocking the instrument tray, wherein, in the unlocked state, the instrument tray including the claws is removable from the dentist element. The dentist element has a movable actuating element which can be moved in a predetermined direction to separately actuate the first locking mechanism in order to unlock the handle for removal, and the same can be moved in a direction opposite to the predetermined direction to separately actuate the second locking mechanism in order to unlock the instrument tray for removal.

A major advantageous effect of the present invention is that the dental treatment unit according to the invention can have either the handle or the instrument tray selectively unlocked for removal by means of a common actuating element and can thus be operated more easily and safely than commonly known dental treatment units. The actuating element which serves to unlock the handle is also used to unlock the instrument tray. Thus, the actuating element is provided with a dual function.

The essential feature of the invention is the use of a common actuating element that can be actuated in two different directions to separately actuate the locking mechanisms. For this purpose, the skilled person can use various arbitrary locking mechanisms known from the prior art.

In an advantageous embodiment, the first locking mechanism has a latching mechanism, which preferably comprises a spring-loaded torsion cam with a latching nose, and a latching notch on the handle shaft. For unlocking the handle, the torsion cam is rotated with the actuating element. The latching mechanism has a self-reinforcing effect. The latching notch preferably has a curved shape so that the latching mechanism has a tolerance-compensating and play-reducing effect. The actuating element can be mounted like a rotatable lever. Alternatively, it can be mounted like a slider so that it can be slid back and forth.

In another advantageous embodiment, the second locking mechanism has also a latching mechanism, which preferably comprises a bending element with a latching nose, and a latching notch on the instrument tray. For unlocking the instrument tray, the bending element is flexed with the actuating element.

In a further advantageous embodiment, the first locking mechanism preferably additionally has an ejection function for ejecting the handle when it is unlocked. This is realized by a spring element.

In a further advantageous embodiment, the second locking mechanism preferably also has an ejection function for ejecting the instrument tray when it is unlocked. This is also realized by a spring element.

In a further advantageous embodiment, the handle shaft has a projection that enters form-fittingly into a groove in the dentist element when the handle is in the locked state. This allows for a minimized play and secures the handle against rotation in the locked state.

In another advantageous embodiment, the handle shaft is pulled against a conical stop by the spring-loaded latching mechanism, e.g., the torsion cam, which enables a form-fitting seating. This enables a clearance-minimized fit due to the conical stop. At the same time, this enables a tolerance-compensating handle mechanism.

In another embodiment, the actuating element is arranged on the side of the dentist element facing away from the handle, preferably on the lower side of the dentist element. This spatial separation of handle and the actuating element enables the complete gripping area in the vicinity of the handle receptacle to be cleaned more easily when the handle is removed. The handle and the instrument tray can be thermally disinfected. The remote release, namely the unlocking of the handle is thus far away from the handle which is hygienically critical. Therefore, a cross-contamination of the handle through the actuating element is not possible or is very low.

### BRIEF DESCRIPTION OF THE DRAWINGS

In the following description, the present invention will be explained in more detail by means of exemplary embodiments and with reference to the drawings, wherein
Fig. 1 - shows a perspective view of a dental treatment unit according to one embodiment of the present invention;
Fig. 2 - shows an enlarged view of the dentist element with the instrument tray and the handles of the dental treatment unit in Fig. 1;
Fig. 3 - shows an enlarged view of the dentist element with the instrument tray of the dental treatment unit in Fig.1, wherein the handles have been removed;
Fig. 4 - shows a cross-sectional view of the dentist element with the instrument tray and the handle of the dental treatment unit in Fig.2;
Fig. 5 - shows a cross-sectional view of the dentist element with the instrument tray and the handle of the dental treatment unit in Fig. 2, where the actuating element has been actuated in a first direction to unlock the handle for removal;
Fig. 6 - shows a cross-sectional view of the dentist element with the instrument tray and the handle of the dental treatment unit in Fig.2, wherein the handle has been removed after unlocking;
Fig. 7 - shows a cross-sectional view of the dentist element with the instrument tray of the dental treatment unit in Fig.2, wherein the actuating element has been actuated in a second direction opposite to the first direction to unlock the instrument tray for removal;
Fig. 8 - shows a cross-sectional view of the dentist element with the instrument tray of the dental treatment unit in Fig.2, wherein the instrument tray has been removed after unlocking;
Fig. 9 - shows a perspective view of the dentist element with the instrument tray of the dental treatment unit in Fig.2, wherein the instrument tray has been removed after unlocking.

The reference numbers shown in the drawings designate the elements listed below, which are referred to in the following description of the exemplary embodiments.
- 1.: Dental treatment unit
- 2, 2': Dentist element, assistant element
- 3.: Handle
- 4.: Instrument tray
- 4a.: Claw
- 5.: Instrument
- 6.: First locking mechanism
- 7.: Second locking mechanism
- 8.: Actuating element
- 9.: Torsion cam
- 10.: Latching nose
- 11.: Latching notch (recess)
- 12.: Shaft
- 13.: Bending element
- 14.: Latching nose
- 15.: Latching notch (opening)
- 16.: Spring element
- 17.: Spring element
- 18.: Projection
- 19.: Groove
- 20.: Conical wall part
- 21.: Conical counter wall part
- 22.: Patient chair
- 23.: Chair base
- 24.: Water unit
- 25.: User (touch control) interface
- 26.: Foot switch
- 27.: Instrument hose
- 28.: Suction hose
- 29.: Coupling
- 30.: Handle receptacle

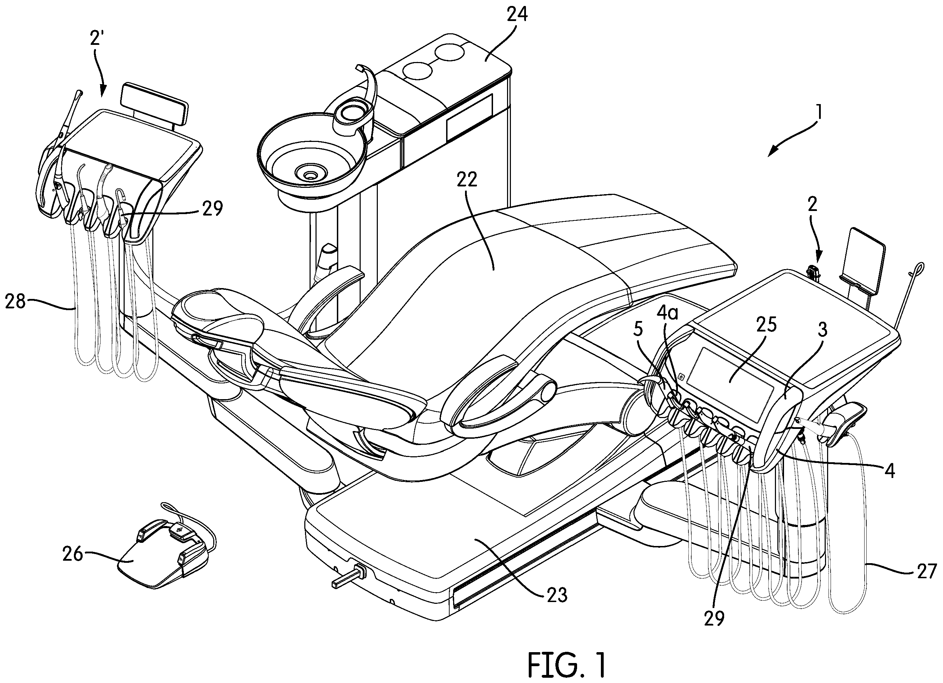

Fig. 1 partially shows a dental treatment unit (1) according to an embodiment of the invention. The dental treatment unit (1) comprises a patient chair (22) with a chair base (23), a water unit (24), an assistant element (2'), a dentist element (2) preferably with a user interface (25), and a foot switch (26). The water unit (24) is arranged on the left side of the patient chair (22) in Fig. 1. The water unit (24) can also be arranged on the right side of the patient chair (22). The cleaning processes can be carried out by means of the water unit (24). The integrated cleaning processes are intended to make it easier for the users of the dental treatment unit (1) according to the invention to keep the couplings (29) and hoses (27,28) of the instruments (5) hygienic.

Dental treatment units (1) are generally known to the skilled persons to a large extent from the prior art, therefore further details are omitted in order not to unnecessarily lengthen the description. The dentist element (2) is explained in detail in the following description.

### Dentist element

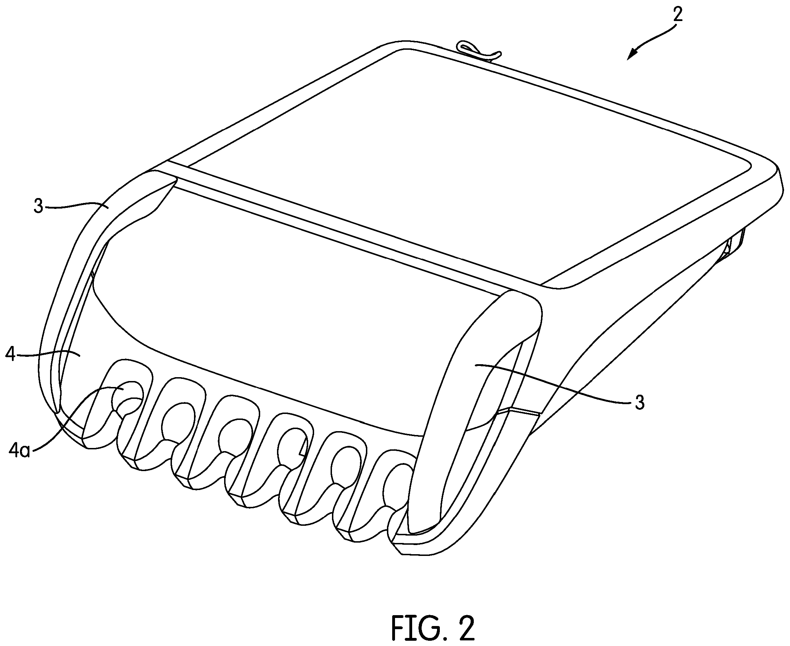

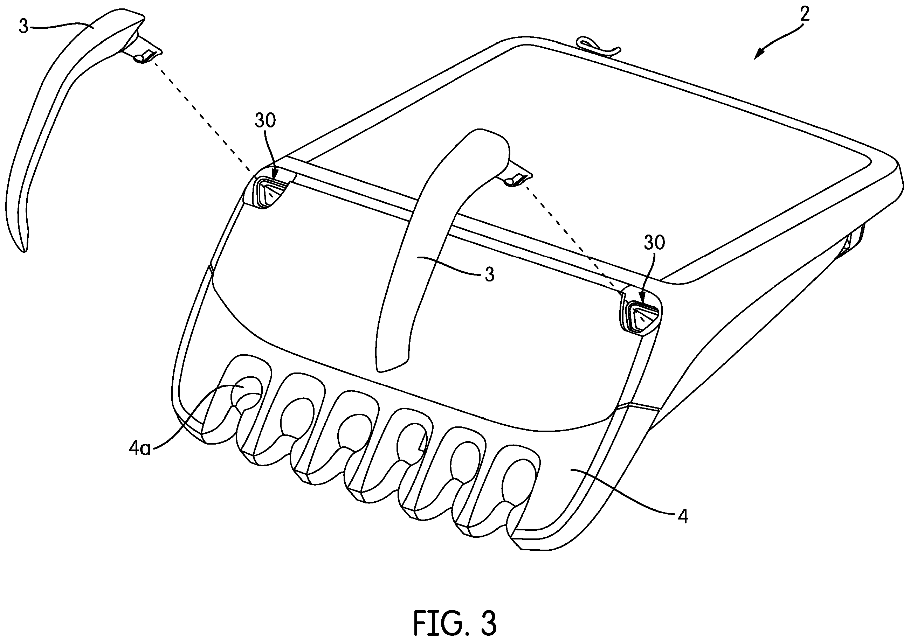

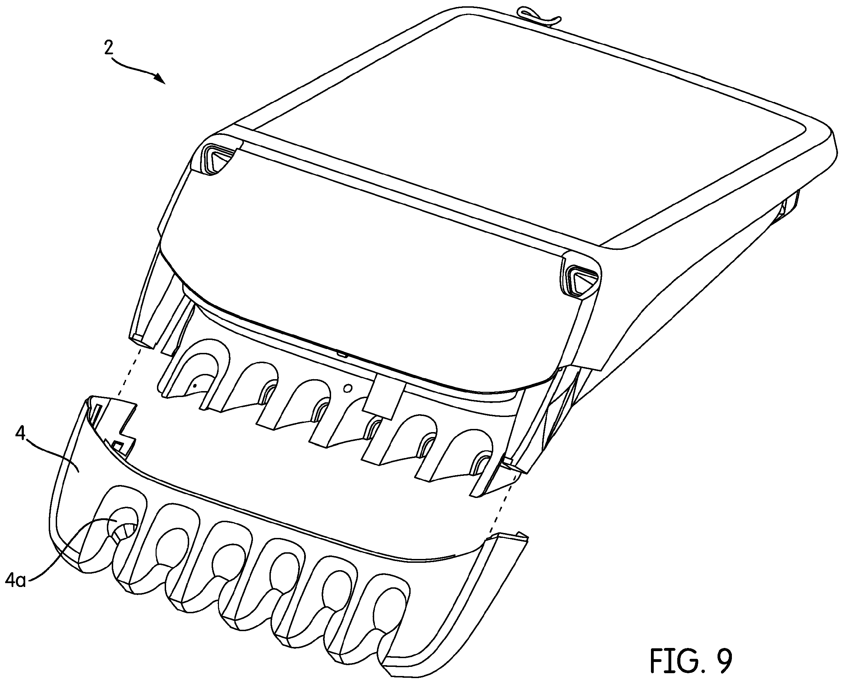

As shown in Fig. 1, the dental treatment unit (1) preferably has a movable dentist element (2). As shown in Figs. 2 and 3, the dentist element (2) has two removable handles (3) for moving the same. As shown in Fig. 9, the dentist element (2) also has a removable instrument tray (4) for depositing instruments (5). As shown in Fig. 1, the instrument tray (4) has a plurality of claws (4a) for respectively depositing the instruments (5). The instrument tray (4) including the claws (4a) is preferably provided as an integral piece of plastic material.

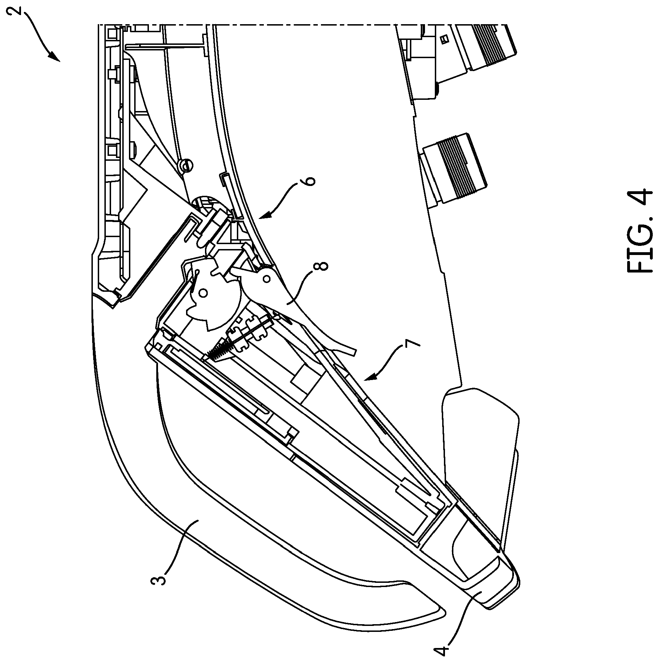

As shown in Fig. 4, the dentist element (2) includes on each side a first locking mechanism (6) for locking/unlocking the handle (3), and a second locking mechanism (7) for locking/unlocking the instrument tray (4). In the unlocked state of the first locking mechanism (6), the handle (3) is entirely removable from the dentist element (2). In the unlocked state of the second locking mechanism (7), the instrument tray (4) including the claws (4a) is entirely removable from the dentist element (2). The handle (3) and instrument tray (4) can be unlocked and removed independently from each other.

### Unlocking and locking the handles

As shown in Figs. 4 to 6, the dentist element (2) has a movable actuating element (8) that can be moved in a predetermined direction (P) to actuate the first locking mechanism (6) in order to unlock the handle (3) for removal. The actuating element (8) is located on the underside of the dentist element (2) facing away from the handle (3). The actuating element (8) is provided separately from the handle (3). The actuating element (8) has the form of a rotatable lever. Alternatively, the actuating element (8) may have the form of movable slider (not shown) that can be moved back and forth.

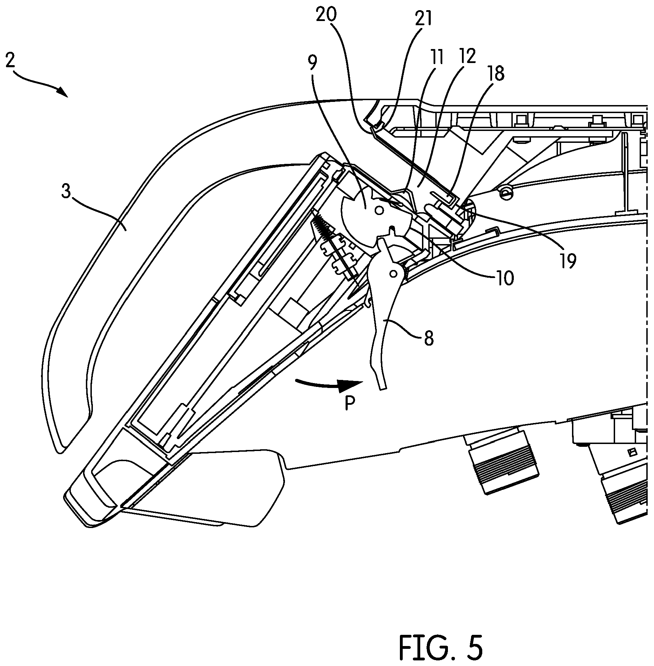

As shown in Fig. 5, the first locking mechanism (5) has a torsion cam (9) with a latching nose (10). There is a latching notch (11) on the handle shaft (12). When the actuating element (8) is moved along the predetermined direction (P), it rotates the spring-loaded torsion cam (9) so that the latching nose (10) thereof is disengaged from the latching notch (11) of the handle shaft (12), and thus the handle (3) can be freely removed. In the locked state of the first locking mechanism (5), the latching action is self-reinforcing due to the spring-loaded torsion cam, so that an extraction of the handle shaft (12) is not possible. As shown in Fig. 3, the handle (3) is provided without any moving parts. Thus, tool-less, and one-handed operation is possible during latching or unlatching. The handle receptacle (30), in which the handle shaft (12) is inserted, is entirely inside the dentist element (2) and not exposed, thus protected.

As shown in Fig. 5, the contact surface of the latching nose (10) on the torsion cam (9) for contacting the latching notch (11) on the handle shaft (12) has a curved shape to reduce the play in the locked state of the handle (3). For joining and releasing the handle (12) from the dentist element (2), an assembly clearance is necessary to prevent disturbing clamping during joining/releasing. On the other hand, in the locked state of the handle (3), this play must be reduced to a minimum. The above-mentioned latching mechanism enables the tolerances of the components involved as well as assembly tolerances in the possible range to have no influence on the tight fit of the joined handle (3). For ergonomic, safe handling of the handle (3) and for precise positioning of the dentist element (2), the most rigid and solid connection possible between the handle (2) and the head of the dentist element (2) is necessary. This is made possible by the above-described latching mechanism.

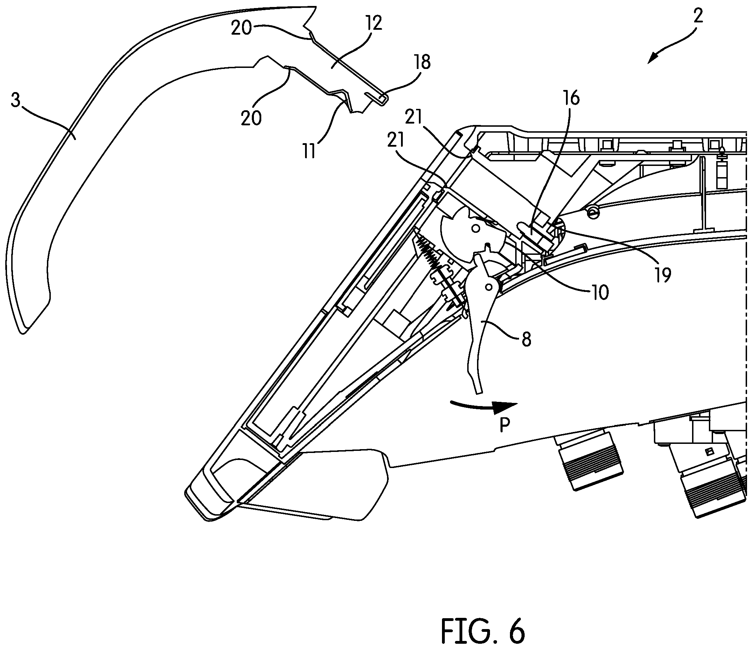

As shown in Fig. 6, the first locking mechanism (6) has a spring element (16) that pushes the handle shaft (3) to the release position to eject the handle (3) when unlocked.

As shown in Figs. 5 and 6, the handle shaft (12) has a projection (18) that positively enters a groove (19) in the dentist element (2) when the handle (3) is locked.

As shown in Fig. 4, the handle shaft (12) has a conical wall part (20) which, when the handle (3) is locked, is positively seated on a corresponding conical counter-wall part (21) in the dentist element (2).

### Unlocking and locking the instrument tray

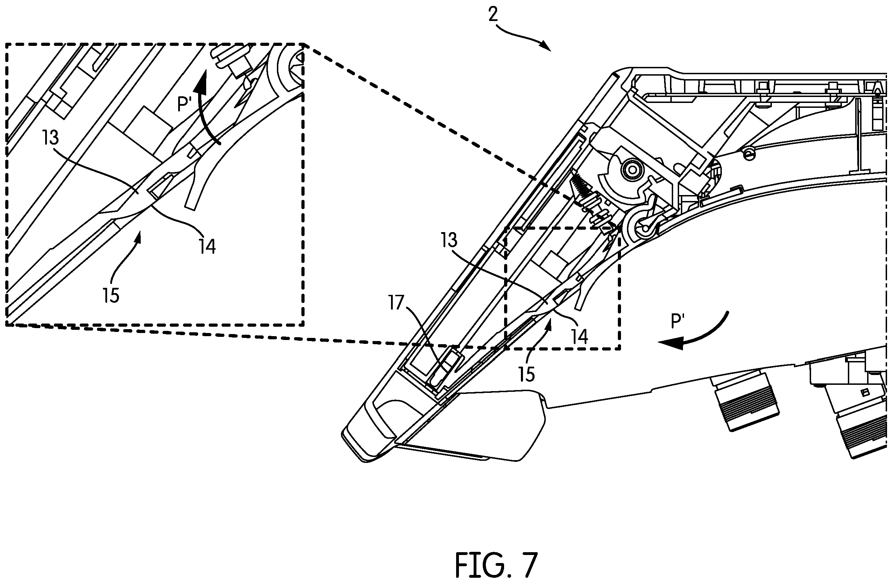

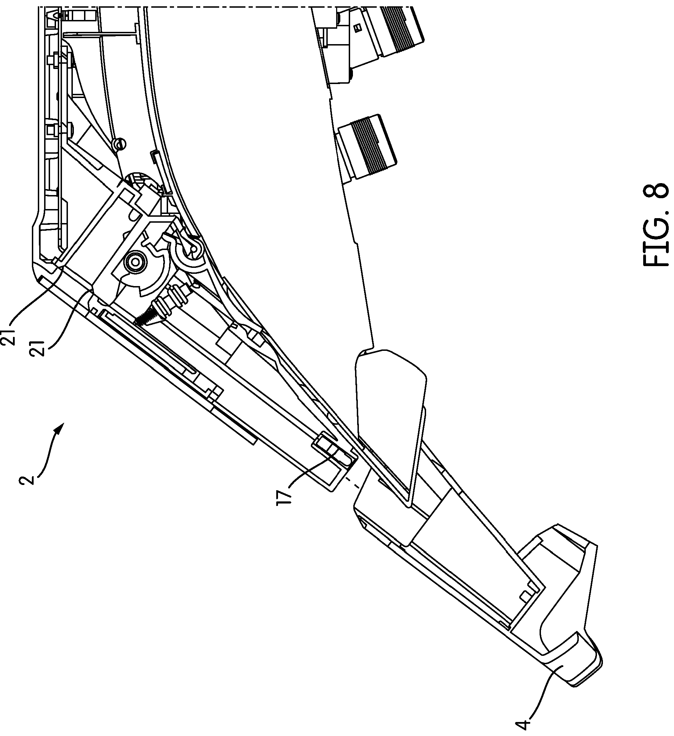

As shown in Figs. 7 and 8, the movable actuating element (8), can be moved in a direction (P') opposite to the predetermined direction (P) to actuate the second locking mechanism (7) in order to unlock the instrument tray (4) for removal.

As shown in Figs. 7 to 8, the second locking mechanism (6) has a bending element (13) with a latching nose (14). There is a latching notch (15) on the instrument tray (4). When the actuating element (8) is moved along the opposite direction (P'), it flexes the bending element (13) so that the latching nose (14) thereof is disengaged from the latching notch (15) of the instrument tray (4).

As shown in Fig. 8, the second locking mechanism (7) has a spring element (17) that pushes the instrument tray (4) to the release position to eject the instrument tray (4) when unlocked.

The handles (3) and also the instrument tray (4) are preferably thermally disinfected and hygienically flawless in the state before assembly. When mounting the handle (3) and the instrument tray (4), only the handle (3) and the instrument tray (4) must be touched to ensure solid mounting of both elements on the dentist element (2). Thus, no additional/simultaneous manual operation of the locking mechanisms (6;7) are required. This fact offers a hygienic advantage, as there is no contamination by touching other elements. Locking is performed automatically by simply inserting the handles (3) into the receptacles (30) and riding the instrument tray (4) over the bending element (13).

## Claims

1. A dental treatment unit (1) with a movable dentist element (2) comprising:
at least one removable handle (3) for moving the dentist element (2);
a removable instrument tray (4) for depositing instruments (5), wherein the instrument tray (4) has one or more claws (4a) for respectively depositing one or more instruments (5);
a first locking mechanism (6) for locking/unlocking the handle (3) wherein, in the unlocked state, the handle (3) is removable from the dentist element (2);
a second locking mechanism (7) for locking/unlocking the instrument tray (4) wherein, in the unlocked state, the instrument tray (4) including the claws (4a) is removable from the dentist element (2);
**characterized in that**
the dentist element (2) comprises a movable actuating element (8) which can be moved in a predetermined direction (P) to individually actuate the first locking mechanism (6) in order to unlock the handle (3) for removal, and the same movable actuating element (8) can be moved in a direction (P') which is opposite to the said predetermined direction (P) to individually actuate the second unlocking mechanism (7) in order to unlock the instrument tray (4) for removal.

2. The dental treatment unit (1) according to claim 1, **characterized in that** the first locking mechanism (6) comprises: a spring-loaded torsion cam (9) with a latching nose (10), and a latching notch (11) on the handle shaft (12), wherein the actuating element (8) is arranged to rotate the torsion cam (9) upon actuation along the predetermined direction (P) so that the latching nose (10) thereof is disengaged from the latching notch (11) of the handle shaft (12).

3. The dental treatment unit (1) according to claim 2, **characterized in that** the contact surface of the latching nose (10) on the torsion cam (9) facing the latching notch (11) on the handle shaft (12) has a curved shape.

4. The dental treatment unit (1) according to one of the preceding claims, **characterized in that** the second locking mechanism (7) comprises: a bending element (13) with a latching nose (14), and a latching opening (15) on the instrument tray (4), wherein the actuating element (8) is arranged, when actuated along the direction (P') opposite to the predetermined direction (P), to stretch the bending element (13) so that the latching nose (14) thereof is disengaged from the latching opening (15) of the instrument tray (4).

5. The dental treatment unit (1) according to any one of the preceding claims, **characterized in that** the first locking mechanism (6) has a spring element (16) that pushes the handle shaft (12) to the unlocking position to eject the handle (3) when unlocked.

6. The dental treatment unit (1) according to any one of the preceding claims, **characterized in that** the second locking mechanism (7) has a spring element (17) that pushes the instrument tray (4) to the unlocking position to eject the instrument tray (4) when unlocked.

7. The dental treatment unit (1) according to one of the preceding claims, **characterized in that** the handle shaft (21) has a projection (18) which, when the handle (3) is in the locked state, enters into a groove (19) in the dentist element (2) in a form-fitting manner.

8. The dental treatment unit (1) according to one of the preceding claims, **characterized in that** the handle shaft (12) has a conical wall part (20) which, in the locked state of the handle (3), is form-fittingly seated on a corresponding counter-wall part (21) in the dentist element (2).

9. The dental treatment unit (1) according to one of the preceding claims, **characterized in that** the actuating element (8) is arranged on the underside of the dentist element (2) facing away from the handle (3).

10. Dental treatment unit (1) according to one of the preceding claims, **characterized in that** the movable actuating element (8) is provided separately from the handle (3) and has either the form of a rotatable lever or has the form of a back and forth movable slider.

## Patentansprüche

1. Dentalbehandlungseinheit (1) mit einem beweglichen Zahnarztelement (2), umfassend:
mindestens einen entfernbaren Griff (3) zum Bewegen des Zahnarztelements (2);
ein entfernbares Instrumententablett (4) zum Ablegen von Instrumenten (5), wobei das Instrumententablett (4) eine oder mehrere Klauen (4a) jeweils zum Ablegen eines oder mehrerer Instrumente (5) aufweist;
einen ersten Verriegelungsmechanismus (6) zum Verriegeln/Entriegeln des Griffs (3), wobei, in dem entriegelten Zustand, der Griff (3) aus dem Zahnarztelement (2) entfernbar ist;
einen zweiten Verriegelungsmechanismus (7) zum Verriegeln/Entriegeln des Instrumententabletts (4), wobei, in dem entriegelten Zustand, das Instrumententablett (4) einschließlich der Klauen (4a) aus dem Zahnarztelement (2) entfernbar ist;
**dadurch gekennzeichnet, dass**
das Zahnarztelement (2) ein bewegliches Betätigungselement (8) umfasst, das in einer vorbestimmten Richtung (P) bewegt werden kann, um individuell den ersten Verriegelungsmechanismus (6) zu betätigen, um den Griff (3) zum Entfernen zu entriegeln, und dasselbe bewegliche Betätigungselement (8) in einer Richtung (P') bewegt werden kann, die der vorbestimmten Richtung (P) entgegengesetzt ist, um individuell den zweiten Entriegelungsmechanismus (7) zu betätigen, um das Instrumententablett (4) zum Entfernen zu entriegeln.

2. Dentalbehandlungseinheit (1) nach Anspruch 1, **dadurch gekennzeichnet, dass** der erste Verriegelungsmechanismus (6) umfasst: einen federbelasteten Torsionsnocken (9) mit einer Rastnase (10) und einer Rastkerbe (11) auf dem Griffschaft (12), wobei das Betätigungselement (8) angeordnet ist, um den Torsionsnocken (9) bei Betätigung entlang der vorbestimmten Richtung (P) zu drehen, so dass dessen Rastnase (10) außer Eingriff mit der Rastkerbe (11) des Griffschafts (12) ist.

3. Dentalbehandlungseinheit (1) nach Anspruch 2, **dadurch gekennzeichnet, dass** die Kontaktfläche der Rastnase (10) auf dem Torsionsnocken (9), der Rastkerbe (11) auf dem Griffschaft (12) zugewandt, eine gekrümmte Form aufweist.

4. Dentalbehandlungseinheit (1) nach einem der vorhergehenden Ansprüche, **dadurch gekennzeichnet, dass** der zweite Verriegelungsmechanismus (7) umfasst: ein Biegeelement (13) mit einer Rastnase (14) und einer Rastöffnung (15) auf dem Instrumententablett (4), wobei das Betätigungselement (8) angeordnet ist, um, bei Betätigung entlang der Richtung (P') entgegengesetzt zu der vorbestimmten Richtung (P), das Biegeelement (13) zu dehnen, so dass dessen Rastnase (14) außer Eingriff mit der Rastöffnung (15) des Instrumententabletts (4) ist.

5. Dentalbehandlungseinheit (1) nach einem der vorhergehenden Ansprüche, **dadurch gekennzeichnet, dass** der erste Verriegelungsmechanismus (6) ein Federelement (16) aufweist, das den Griffschaft (12) in die Entriegelungsposition drückt, um den Griff (3) auszustoßen, wenn entriegelt.

6. Dentalbehandlungseinheit (1) nach einem der vorhergehenden Ansprüche, **dadurch gekennzeichnet, dass** der zweite Verriegelungsmechanismus (7) ein Federelement (17) aufweist, von dem das Instrumententablett (4) in die Entriegelungsposition gedrückt wird, um das Instrumententablett (4) auszustoßen, wenn entriegelt.

7. Dentalbehandlungseinheit (1) nach einem der vorhergehenden Ansprüche, **dadurch gekennzeichnet, dass** der Griffschaft (21) einen Vorsprung (18) aufweist, der, wenn sich der Griff (3) in dem verriegelten Zustand befindet, formschlüssig in eine Nut (19) in dem Zahnarztelement (2) eintritt.

8. Dentalbehandlungseinheit (1) nach einem der vorhergehenden Ansprüche, **dadurch gekennzeichnet, dass** der Griffschaft (12) ein konisches Wandteil (20) aufweist, das, in dem verriegelten Zustand des Griffs (3), formschlüssig auf einem entsprechenden Gegenwandteil (21) in dem Zahnarztelement (2) sitzt.

9. Dentalbehandlungseinheit (1) nach einem der vorhergehenden Ansprüche, **dadurch gekennzeichnet, dass** das Betätigungselement (8) auf der Unterseite des Zahnarztelements (2), dem Griff (3) abgewandt, angeordnet ist.

10. Dentalbehandlungseinheit (1) nach einem der vorhergehenden Ansprüche, **dadurch gekennzeichnet, dass** das bewegliche Betätigungselement (8) getrennt von dem Griff (3) vorgesehen ist und entweder die Form eines drehbaren Hebels aufweist oder die Form eines hin- und herbeweglichen Schiebers aufweist.

## Revendications

1. Unité de traitement dentaire (1) avec une tablette pour dentiste mobile (2) comprenant :
au moins une poignée amovible (3) pour déplacer la tablette pour dentiste (2) ;
un plateau d'instruments amovible (4) pour déposer des instruments (5), dans laquelle le plateau d'instruments (4) comporte une ou plusieurs griffes (4a) pour déposer respectivement un ou plusieurs instruments (5) ;
un premier mécanisme de verrouillage (6) pour verrouiller/déverrouiller la poignée (3) dans laquelle, dans l'état déverrouillé, la poignée (3) est amovible de la tablette pour dentiste (2) ;
un second mécanisme de verrouillage (7) pour verrouiller/déverrouiller le plateau d'instruments (4) dans laquelle, dans l'état déverrouillé, le plateau d'instruments (4) comprenant les griffes (4a) est amovible de la tablette pour dentiste (2) ;
**caractérisée en ce que**
la tablette pour dentiste (2) comprend un élément d'actionnement mobile (8) qui peut être déplacé dans une direction prédéterminée (P) pour actionner individuellement le premier mécanisme de verrouillage (6) afin de déverrouiller la poignée (3) pour son retrait, et le même élément d'actionnement mobile (8) peut être déplacé dans une direction (P') qui est opposée à ladite direction prédéterminée (P) pour actionner individuellement le second mécanisme de déverrouillage (7) afin de déverrouiller le plateau d'instruments (4) pour son retrait.

2. Unité de traitement dentaire (1) selon la revendication 1, **caractérisée en ce que** le premier mécanisme de verrouillage (6) comprend : une came de torsion chargée par ressort (9) avec un nez d'accrochage (10), et une encoche d'accrochage (11) sur l'arbre de poignée (12), dans laquelle l'élément d'actionnement (8) est agencé pour faire tourner la came de torsion (9) lors de son actionnement le long de la direction prédéterminée (P) de sorte que son nez d'accrochage (10) soit dégagé de l'encoche d'accrochage (11) de l'arbre de poignée (12).

3. Unité de traitement dentaire (1) selon la revendication 2, **caractérisée en ce que** la surface de contact du nez d'accrochage (10) sur la came de torsion (9) faisant face à l'encoche d'accrochage (11) sur l'arbre de poignée (12) a une forme incurvée.

4. Unité de traitement dentaire (1) selon l'une des revendications précédentes, **caractérisée en ce que** le second mécanisme de verrouillage (7) comprend : une tablette de flexion (13) avec un nez d'accrochage (14), et une ouverture d'accrochage (15) sur le plateau d'instruments (4), dans laquelle l'élément d'actionnement (8) est agencé, lorsqu'il est actionné le long de la direction (P') opposée à la direction prédéterminée (P), pour étirer la tablette de flexion (13) de sorte que le nez d'accrochage (14) de celui-ci soit dégagé de l'ouverture d'accrochage (15) du plateau d'instruments (4).

5. Unité de traitement dentaire (1) selon l'une quelconque des revendications précédentes, **caractérisée en ce que** le premier mécanisme de verrouillage (6) a un élément à ressort (16) qui pousse l'arbre de poignée (12) vers la position de déverrouillage pour éjecter la poignée (3) lorsqu'elle est déverrouillée.

6. Unité de traitement dentaire (1) selon l'une quelconque des revendications précédentes, **caractérisée en ce que** le second mécanisme de verrouillage (7) a un élément à ressort (17) qui pousse le plateau d'instruments (4) vers la position de déverrouillage pour éjecter le plateau d'instruments (4) lorsqu'il est déverrouillé.

7. Unité de traitement dentaire (1) selon l'une des revendications précédentes, **caractérisée en ce que** l'arbre de poignée (21) a une saillie (18) qui, lorsque la poignée (3) est dans l'état verrouillé, entre dans une rainure (19) dans la tablette pour dentiste (2) par ajustement de forme.

8. Unité de traitement dentaire (1) selon l'une des revendications précédentes, **caractérisée en ce que** l'arbre de poignée (12) a une partie de paroi conique (20) qui, dans l'état verrouillé de la poignée (3), est logée par ajustement de forme sur une partie de contre-paroi correspondante (21) dans la tablette pour dentiste (2).

9. Unité de traitement dentaire (1) selon l'une des revendications précédentes, **caractérisée en ce que** l'élément d'actionnement (8) est agencé sur la face inférieure de la tablette pour dentiste (2) tournée à l'opposé de la poignée (3).

10. Unité de traitement dentaire (1) selon l'une des revendications précédentes, **caractérisée en ce que** l'élément d'actionnement mobile (8) est fourni séparément de la poignée (3) et a soit la forme d'un levier rotatif, soit la forme d'un coulisseau mobile d'avant en arrière.
